# EUROPÄISCHE PATENTSCHRIFT

(11) **EP 2 340 606 B1**
(45) Veröffentlichungstag und Bekanntmachung des Hinweises auf die Patenterteilung: **27.03.2013**
(21) Anmeldenummer: 09783962.5
(22) Anmeldetag: 13.10.2009
(51) Int. Cl.: H02P 6/18, G01R 19/00

(54) **STEUERVORRICHTUNG UND VERFAHREN ZUM STEUERN EINES ELEKTRONISCH KOMMUTIERTEN ELEKTROMOTORS, UND ELEKTROMOTOR**
CONTROL DEVICE AND METHOD FOR CONTROLLING AN ELECTRONICALLY COMMUTATED MOTOR, AND MOTOR
DISPOSITIF DE COMMANDE ET PROCÉDÉ DE COMMANDE D'UN MOTEUR ÉLECTRIQUE À COMMUTATION ÉLECTRONIQUE, ET MOTEUR ÉLECTRIQUE

(30) Priorität: 23.10.2008 DE 102008043117
(43) Veröffentlichungstag der Anmeldung: 06.07.2011
(73) Patentinhaber: Robert Bosch GmbH, 70442 Stuttgart (DE)
(72) Erfinder: FRICKER, David, F-67240 Oberhoffen Sur Moder (FR)
(86) Internationale Anmeldenummer: PCT/EP2009/063306
(87) Internationale Veröffentlichungsnummer: WO 2010/046269

(56) Entgegenhaltungen:
- EP-A1- 1 471 332
- JP-A- 2003 224 991
- JP-A- 2005 287 187
- US-A1- 2003 173 855
- US-A1- 2004 232 868
- US-A1- 2007 176 567

## Beschreibung

### Stand der Technik

Die Erfindung betrifft eine Steuervorrichtung zum Steuern eines elektronisch kommutierten Elektromotors, wobei die Steuervorrichtung einen Steuereingang für ein eine Rotorposition eines Rotors des Elektromotors repräsentierendes Rotorpositionssignal und einen Steuerausgang zum Verbinden mit Erregerspulen des Elektromotors aufweist. Die Steuervorrichtung ist ausgebildet, in Abhängigkeit von dem Rotorpositionssignal einen Laststrom zum Bewegen des Rotors zu erzeugen und den Laststrom über den Steuerausgang auszugeben. Die Steuervorrichtung weist zudem wenigstens einen mit dem Steuerausgang verbundenen Halbleiterschalter auf, der ausgebildet ist, in Abhängigkeit von einem Halbleitersteuersignal einen Laststrom zum Bewegen des Rotors zu schalten. Ferner weist die Steuervorrichtung wenigstens einen den wenigstens einen Halbleiterschalter umfassenden Pulsgenerator auf, welcher eingangsseltig mit dem Steuereingang wirkverbunden und ausgangsseitig mit dem Steuerausgang verbunden ist, wobei der Pulsgenerator ausgebildet ist, den Laststrom zum Bewegen des Rotors als gepulstes Halbleitersteuersignal derart zu erzeugen, dass das gepulste Halbleitersteuersignal zeitlich aufeinanderfolgende Steuerpulse mit einer Steuerpulsdauer aufweist. Der Pulsgenerator weist einen Delta-Sigma-Wandler auf, der eingangsseitig mit dem Steuereingang wirkverbunden und ausgebildet ist, in Abhängigkeit von dem Rotorpositionssignal das Halbleitersteuersignal als digitalen Bitstrom zu erzeugen. Der Delta-Sigma-Wandler weist einen Rauschgenerator auf, welcher ausgebildet ist, einem an einem Eingang des Pulsgenerators empfangenen, in Abhängigkeit des Rotorpositionssignals erzeugten Rotorsteuersignal ein Rauschen zu überlagern und den digitalen Bitstrom derart zu erzeugen, dass eine Pulsfolgefrequenzbandbreite des Halbleitersteuersignals größer ist als eine Frequenzbandbreite des eingangsseitig empfangenen Rotorpositionssignals.

Aus der DE 103 59 7133 A1 ist eine Rotorstellungssensoranordnung und ein Verfahren zum Erfassen einer Rotorstellung bekannt, bei dem ein ferromagnetisch ausgebildeter Rotor eines Elektromotors Sensormagneten zum Erzeugen eines Rotorsignals aufweist. Die Rotorstellungssensoranordnung weist auch eine Rotorstellungsauswertungsvorrichtung auf, welche ausgebildet ist, ein Rotorpositionssignal zu erzeugen, welches einen digitalen Werte mit einer Auflösung von mindestens 2-Bit repräsentiert. Weiter weist die Rotorstellungsauswertungsvorrichtung einen Analog-Digital-Wandler mit einer Auflösung von mindestens 2-Bit auf.

Aus der US 2003/173855 A1 ist eine Steuervorrichtung gemäß der eingangs erwähnten Art bekannt. Zwar ist dort nicht explizit erwähnt, dass der Pulsgenerator ausgebildet ist, den Laststrom zum Bewegen des Rotors als gepulstes Halbleitersteuersignal derart zu erzeugen, dass das gepulste Halbleitersteuersignal zeitlich aufeinanderfolgende Steuerpulse mit einer Steuerpulsdauer aufweist, jedoch geht dies beispielsweise aus der US 2007/176567 A1 hervor. Weithin offenbaren sowohl die EP 1471332 A1 als auch die US 2004/232868 A1 die Verwendung eines Delta-Sigma-Wandlers zur Erzeugung eines Rauschsignals und zur Erhöhung der Frequenzbandbreite am Ausgang des Delta-Sigma-Wandlers.

### Offenbarung der Erfindung

Die erfindungsgemäße Steuervorrichtung weist die Merkmale der Steuervorrichtung nach Anspruch 1 Art auf, wobei zur Erzeugung des Rauschens und zur Vergrößerung des Frequenzumfangs des Halbleitersteuersignals der Rauschgenerator des Sigma-Delta-Wandlers durch einen mittelbar mit dem Eingang des Pulsgenerators verbundenen Komparator und ein mit dem Komparator sowie einem Taktgeber verbundenes Flip-Flop gebildet ist, und wobei eine Spannungsrückführung derart realisiert ist, dass der Ausgang des Flip-Flops über einen Digital-Digital-Wandler oder einen Spannungsteiler auf ein mit dem Eingang des Pulsgenerators verbundenes Differenzglied rückgekoppelt ist.

Der wenigstens eine Halbleiterschalter ist bevorzugt als Transistor einer Transistorhalb- oder vollbrücke ausgebildet. Nachfolgend wird das Halbleftersteuersignal für diese Ausführungsform auch als Transistorsteuersignal bezeichnet. Die Transistoren können beispielsweise jeweils als MOS-FET (MOS-FET = Metal-Oxide-Semiconductor-Field-Effect-Transistor), als MIS-FET (MIS = Metal-Insulator-Semiconductor), als bipolarer Transistor, als JFET (JFET = Junction-FET), als IGBT (IGBT = Insulated-Gate-Bipolar-Transistor), als HEMT (HEMT = Hlgh-Electron-Mobility-Transistor), als HBT (HBT = Heterojunction-Bipolar-Transistor) oder dergleichen ausgebildet sein.

In einer anderen Ausführungsform kann der wenigstens eine Halbleiterschalter beispielsweise auch als ein Thyristor oder ein Triac ausgebildet sein, welcher in Abhängigkeit von dem Halbleitersteuersignal den Laststrom schaltet.

Der Delta-Sigma-Wandler ist beispielsweise durch einen DSP (DSP = Digitaler-Signal-Prozessor), einen FPGA (FPGA = Field-Programmable-Gate-Array), einen Mikroprozessor insbesondere in Verbindung mit einem auf einem Computerprogrammprodukt gespeicherten Programm oder durch einen Microcontroller verwirklicht.

Der Rauschgenerator ist bevorzugt dadurch gebildet, dass der Delta-Sigma-Wandler ausgangsseitig tiefpassfilterios ausgebildet ist. Ein ausgangsseitiges Tiefpassfilter ist vorteilhaft bevorzugt durch eine am Pulsgenerator ausgangsseitig angeschlossene Last mit einer Impedanz mit Tiefpasscharakteristik gebildet. Die Last ist weiter bevorzugt durch die Erregerspulen gebildet. Dadurch ist die Pulsfolgefrequenzbandbreite des Halbleitersteuersignals im Vergleich zu einer Frequenzbandbreite des eingangsseitig empfangenen Rotorpositionssignals vergrößert

Beispielsweise weist der Delta-Sigma-Wandler ein IIR-Filter (IIR = Infinite-Impulse-Response) auf. Bevorzugt weist der Rauschgenerator eine vorbestimmte Rauschleistung auf, welche durch eine Ordnung des IIR-Filters bestimmt ist. Das IIR-Filter kann als Filter zweiter Ordnung oder größer als zweiter Ordnung gebildet sein. Dadurch kann vorteilhaft die Rauschleistung des Rauschgenerators in Abhängigkeit der Ordnung eingestellt werden.

Bevorzugt ist der Rauschgenerator ausgebildet, einem eingangsseitig empfangenen, in Abhängigkeit des Rotorpositionssignals erzeugten Rotorsteuersignal ein insbesondere weißes Rauschen zu überlagem. Der Rauschgenerator kann in einer anderen Ausführungsform ausgebildet sein, dem eingangsseitig empfange. nen, in Abhängigkeit des Rotorpositionssignals erzeugten Rotorsteuersignal ein farbiges, insbesondere rosa Rauschen zu überlagern. Durch Überlagerung eines rosa Rauschens weisen tiefe Frequenzen im Vergleich zu hohen Frequenzen des rosa Rauschens vorteilhaft eine höhere Energiedichte auf als die hohen Frequenzen. Der Rauschgenerator bewirkt vorteilhaft, dass die Frequenzbandbreite des eingangsseitig empfangenen Rotorpositionssignals, und/oder des Rotorsteuersignals größer ist als ohne Rauschgenerator. Dadurch wird vorteilhaft eine Störleistung in dem Steuersignal auf zueinander verschiedene Frequenzen verteilt und so insgesamt im Endergebnis ein besseres Steuersignal im Hinblick auf eine elektromagnetische Verträglichkeit erzeugt, als bei einer gewöhnlichen Pulsweitenmodulation.

Bevorzugt weist die Steuervorrichtung eine Rotorsteuereinheit auf, welche ausgebildet ist, das Rotorsteuersignal - Insbesondere als analoges Spannungssignal - in Abhängigkeit des Rotorpositionssignals zu erzeugen. Der Pulsgenerator ist bevorzugt ausgebildet, aus dem Rotorpositionssignal ein diskretes, das den Bitstrom repräsentierende gepulste Steuersignal zu erzeugen.

In einer bevorzugten Ausführungsform verbindet die Spannungsrückführung einen Lastzweig des Halbleiterschalters, insbesondere der Transistorhalb- oder vollbrücke, mit dem Differenzglied und ist ausgebildet, eine Spannung des Lastzweiges auf das Differenzglied zurückzuführen, so dass ein Regelglied, insbesondere umfassend die Spannungsrückführung und das Differenzglied, gebildet ist. Das Regelglied ist ausgebildet, eine Versorgungsspannungsschwankung wenigstens teilweise oder vollständig zu kompensieren. Durch das Regelglied kann das Steuersignal zum Ansteuern der Erregerspulen des Elektromotors die Versorgungsspannungsschwankung vorteilhaft nicht, oder nur zum Teil aufweisen.

In einer bevorzugten Ausführungsform ist der Spannungsteiler des Pulsgenerators mit dem Steuerausgang und mit einem Masseanschluss verbunden. Der Spannungsteiler ist mit einem Teilungsanschluss mit dem Differenzglied verbunden. Der Spannungsteiler kann so ein zwischen dem Masseanschluss und Steuerausgang mittels Spannungstellung erzeugtes Potenzial auf das Differenzglied zurückführen. Durch die so ausgebildete Spannungsrückführung kann vorteilhaft eine Versorgungsspannungsschwankung, welche ohne die Spannungsrückführung im Ausgangssignal vorhanden wäre, auf das Differenzglied zurückgeführt und so vorteilhaft wenigstens zum Teil oder ganz kompensiert werden.

In einer bevorzugten Ausführungsform weist das Regelglied einen eingangsseitig mit dem Lastzweig verbundenen Analog-Digital-Wandler auf, wobei der Analog-Digital-Wandler ausgangsseitig mit dem Differenzglied mindestens mittelbar verbunden ist und ausgebildet ist, einen Bitstrom zu erzeugen, der eine Versorgungsspannung der Steuervorrichtung repräsentiert. Durch die so ausgebildete digitale Spannungsrückführung kann vorteilhaft ein Wert der Versorgungsspannung am Eingang des Delta-Sigma-Wandlers durch Differenzbildung verrechnet werden.

In einer vorteilhaften Ausführungsform ist der Digital-Digital-Wandler ausgangsseitig mit dem Differenzglied und eingangsseitig mit dem Analog-Digital-Wandler verbunden. Der Digital-Digital-Wandler ist bevorzugt ein 1-Bit-Digital-Digital-Wandler. Der Digital-Digital-Wandler weist bevorzugt einen Steuereingang auf, welcher mit dem von dem Delta-Sigma-Wandler erzeugten digitalen Bitstrom verbunden ist. Der Digital-Digital-Wandler ist ausgebildet, im Falle einer logischen "Eins" des Bitstroms am Steuereingang ein am Signaleingang empfangenes Digitalsignal des Analog-Digital-Wandlers digital zu wandeln und ein Wandlungsergebnis oder ein zuvor erzeugtes Wandlungsergebnis ausgangsseitig auszugeben. Der Digital-Digital-Wandler ist ausgebildet, im Falle eines eingangsseitig am Steuereingang empfangenen, eine logische "Null" des Bitstroms repräsentierenden Signals ein Ausgangssignal zu erzeugen, welches der logischen "Null" entspricht - oder kein Ausgangssignal zu erzeugen. Durch den Digital-Digital-Wandler kann vorteilhaft ein Kompensieren einer Versorgungsspannungsschwankung präzise erfolgen.

Die Erfindung betrifft auch einen Elektromotor mit einer Steuervorrichtung gemäß der vorbeschriebenen Art. Der Elektromotor weist einen permanentmagnetisch ausgebildeten Rotor und einen Stator mit wenigstens zwei Erregerspulen auf. Die Erregerspulen sind mit dem Steuerausgang der Steuervorrichtung verbunden.

In einer bevorzugten Ausführungsform weist der Stator des Elektromotors drei Erregerspulen auf, und die Steuervorrichtung weist zum Ansteuern der Erregerspulen eine aus mehreren Halbleiterschaltern bestehende 3H- oder B6-Brücke auf, wobei die Halbleiterschalter vorzugsweise als Transistoren ausgebildet sind. Die B6-Brücke besteht in diesem Zusammenhang aus drei Transistorhalbbrücken und die 3H-Brücke aus drei Transistorvoll- bzw. sechs Transistorhalbbrücken. Im Falle einer H-Brücke ist ein erster Anschluss einer Erregerspule mit einem Ausgang einer Transistorhalbbrücke und ein anderer Anschluss der Erregerspule mit einem Ausgang einer zweiten Transistorhalbbrücke verbunden. Im Falle einer B6-brücke ist ein Ausgang einer Transistorhalbbrücke mit einem Anschluss einer Erregerspule verbunden, ein zweiter Anschluss der Erregerspule ist - je nach Schaltung der Erregerspulen - bei einer Sternschaltung mit den zweiten Anschlüssen der anderen Erregerspulen und bei einer Dreieckschaltung mit einem ersten Anschluss einer anderen Erregerspule verbunden.

Der Elektromotor mit der vorbeschriebenen Steuervorrichtung weist vorteilhaft ein Geräuscherzeugungs- und/oder Emissionsspektrum auf, welches im Falle einer entsprechenden Auslegung des Delta-Sigma-Wandlers eine für ein menschliches Gehör psychoakustisch günstige Frequenzverteilung aufweist, bei der beispielsweise Frequenzanteile des Geräuscherzeugungsspektrums außerhalb eines für ein menschliches Ohr wahrnehmbaren Frequenzbereiches liegen und/oder energetisch derart über einen Frequenzbereich verteilt sind, dass tonale Komponenten des Geräuscherzeugungsspektrums vorteilhaft weniger störend hervortreten.

Beispielsweise beträgt eine Samplingfrequenz des Delta-Sigma-Wandlers das zwanzigfache, bevorzugt das 50-fache oder das 100-fache einer Rotorumlauffrequenz des Rotors.

Die Erfindung wird nun im Folgenden anhand von weiteren vorteilhaften Ausführungsbeispielen und anhand von Figuren erläutert.
Figur 1 zeigt schematisch ein Ausführungsbeispiel für einen elektronisch kommutierten Elektromotor mit einer Steuervorrichtung mit einem Delta-Sigma-Wandler;
Figur 2 zeigt schematisch ein Ausführungsbeispiel für eine Steuervorrichtung für einen elektronisch kommutierten Elektromotor mit einem Delta-Sigma-Wandler;
Figur 3 zeigt ein Ausführungsbeispiel für Signalfolgen, welche jeweils an zueinander verschiedenen Orten eines Signalpfades innerhalb der Steuervorrichtung erfasst sind;
Figur 4 zeigt schematisch ein Ausführungsbeispiel für ein Verfahren zum Steuern eines elektronisch kommutierten Elektromotors.

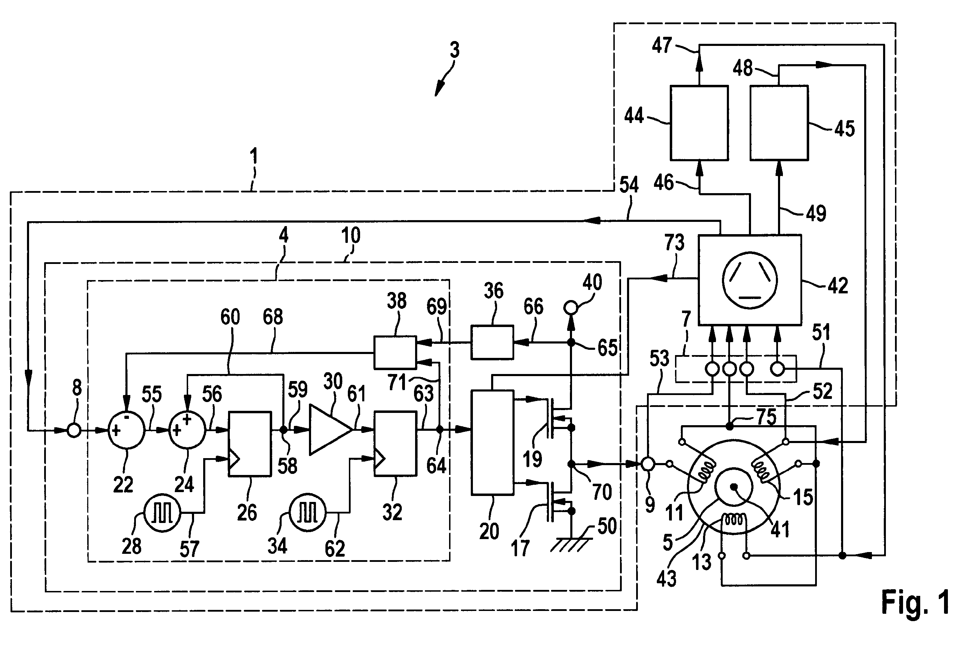

Figur 1 zeigt schematisch ein Ausführungsbeispiel für einen elektronisch kommutierten Elektromotor 3 mit einer Steuervorrichtung 1. Der Elektromotor 3 weist einen Rotor 5 auf, welcher um eine Achse 41 drehbar gelagert ist. Die Steuervorrichtung 1 weist einen Steuereingang 7 und einen Steuerausgang 9 auf. Die Steuervorrichtung 1 weist auch einen Pulsgenerator 10 mit einem Eingang 8 für ein Rotorsteuersignal auf. Der Pulsgenerator 10 ist ausgangsseitig mit dem Steuerausgang 9 verbunden. Der Steuerausgang 9 der Steuervorrichtung 1 ist mit einem Anschluss einer Erregerspule 11 verbunden. Der Elektromotor 3 weist zusätzlich zur Erregerspule 11 eine Erregerspule 13 und eine Erregerspule 15 auf, welche jeweils von einem Stator 43 gehalten, in Umfangsrichtung des Rotors 5 in einem Winkel von 120°, jeweils radial in einem vorbestimmten Abstand von der Achse 41 angeordnet sind. Die Steuereinheit 1 ist der Erregerspule 11, ein Pulsgenerator 44 des Elektromotors 3 der Erregerspule 13 und ein Pulsgenerator 45 des Elektromotors 3 der Erregerspule 15 zugeordnet. Die Pulsgeneratoren 44 und 45 sind jeweils wie der Pulsgenerator 10 ausgebildet.

Die Steuervorrichtung 1 weist ein Differenzglied 22 auf, welches eingangsseitig mit einem positiven Eingang mit dem Eingang 8 des Pulsgenerators 10 verbunden und über eine Steuereinheit 42 mit dem Steuereingang 7 wirkverbunden ist. Das Differenzglied 22 ist ausgangsseitig über eine Verbindungsleitung 55 mit einem Addierglied 24 verbunden. Das Differenzglied 22 weist auch einen negativen Eingang auf, welcher mit einer Verbindungsleitung 68 verbunden ist. Das Differenzglied 22 ist ausgebildet, ein am negativen Eingang empfangenes Signal von einem am positiven Eingang empfangenen Signal zu subtrahieren, und ein Subtraktionsergebnis zu erzeugen und dieses ausgangsseitig auszugeben.

Das Addierglied 24 ist ausgangsseitig über eine Verbindungsleitung 56 mit einem Flip-Flop 26 verbunden. Das Flip-Flop 26 ist eingangsseitig über eine Verbindungsleitung 57 mit einem Taktgeber 28 verbunden. Das Flip-Flop 26 ist ausgangsseitig über einen Verbindungsknoten 58 und eine Verbindungsleitung 60 mit einem positiven Eingang des Addierglieds 24 verbunden. Durch die Verbindungsleitung 60 ist eine Rückkopplungsschleife gebildet. Das Flip-Flop 26 bildet so zusammen mit dem Addierglied 24 einen Integrator. Das Flip-Flop 26 ist ausgangsseitig über den Verbindungsknoten 58 und eine Verbindungsleitung 59 mit einem Komparator 30 verbunden. Der Komparator 30 ist ausgebildet, von einem eingangsseitig empfangenen Signal ein meist signifikantes Bit (MSB) auszuwerten und ein Ausgangssignal zu erzeugen, welches das meist signifikante Bit (MSB) repräsentiert.

Der Komparator 30 ist ausgangsseitig mit einem Flip-Flop 32 verbunden, welches in dieser Ausführungsform als 1-Bit-Speicher ausgebildet ist. Das Flip-Flop 32 ist eingangsseitig über eine Verbindungsleitung 62 mit einem Taktgeber 34 verbunden. Der Taktgeber 34 und der Taktgeber 28 sind beispielsweise jeweils durch einen Schwingquarz gebildet. Das Flip-Flop 32 und der Komparator 30 bilden zusammen einen Rauschgenerator. Mit dem Rauschgenerator wird dem vom Integrator erzeugten Signal ein Rauschen überlagert. Das Flip-Flop 32 ist ausgangsseitig über eine Verbindungsleitung 63 mit einem Verbindungsknoten

64 und mit einem Gate-Treiber 20 verbunden. Der Verbindungsknoten 64 ist über eine Verbindungsleitung 71 mit einem Digital-Digital-Wandler 38 verbunden. Der Digital-Digital-Wandler 38 ist ausgangsseitig über eine Verbindungsleitung 68 mit dem negativen Eingang des Differenzglieds 22 verbunden. Der Digital-Digital-Wandler 38 ist eingangsseitig über eine Verbindungsleitung 69 mit einem Analog-Digital-Wandler 36 verbunden. Das Differenzglied 22, das Addierglied 24, dass Flip-Flop 26, der Komparator 30, das Flip-Flop 32, die Taktgeber 28 und 34 und der Digital-Digital-Wandler 38 bilden zusammen einen Delta-Sigma-Wandler 4. Das Flip-Flop 32 des Delta-Sigma-Wandlers 4 erzeugt am Verbindungsknoten 64 einen Bitstrom. Der Bitstrom wird über die Verbindungsleitung 71 an den Digital-Digital-Wandler 38 gesendet. Der Digital-Digital-Wandler 38 ist ausgebildet, im Falle eines über die Verbindungsleitung 71 eingangsseitig empfangenen Bits welches eine logische "Eins" repräsentiert, ein über die Verbindungsleitung 69 eingangsseitig empfangenes Signal mit insbesondere einer Quantisierung von einem Bit oder mehreren Bits zu wandeln und ein Ausgangssignal zu erzeugen, welches das über die Verbindungsleitung 69 eingangsseitig empfangene Signal repräsentiert. Der Gate-Treiber 20 ist eingangsseitig über den Verbindungsknoten 64 und die Verbindungsleitung 63 mit dem Ausgang des Flipflops 32 verbunden. Der Gate-Treiber 20 ist ausgangsseitig mit einem Gate-Anschluss eines ersten als Transistor 19 ausgebildeten Halbleiterschalter einer Transistorhalbbrücke und mit einem weiteren Ausgang mit einem Gate-Anschluss eines zweiten als Transistor 17 ausgebildeten Halbleiterschalter der Transistorhalbbrücke verbunden. Der Gate-Treiber 20 ist ausgebildet, im Falle eines eingangsseitig empfangenen Signals, welches eine logische "Eins" repräsentiert, den Transistor 19, und im Falle eines eingangsseitig empfangenen Signals, welches eine logische "Null" repräsentiert, den Transistor 17 anzusteuern. Die Transistoren 17 und 19 der Transistorhalbbrücke sind beispielsweise jeweils als Metall-Oxid-Halbleiter-Feldeffekt-Transistoren (MOS-FET), Metall-Isolator-Halbleiter-FeldeffektTransistoren (MIS-FET) oder dergleichen ausgebildet.

Der Transistor 17 ist mit einem Source-Anschluss mit einem Masseanschluss 50, und mit einem Drain-Anschluss mit einem Verbindungsknoten 70 verbunden. Der Transistor 19 ist mit einem Source-Anschluss mit dem Verbindungsknoten 70, und mit einem Drain-Anschluss mit einem Verbindungsknoten 65 verbunden. Der Verbindungsknoten 65 ist über eine Verbindungsleitung 66 mit dem Analog-Digital-Wandler 36 verbunden. Der Verbindungsknoten 65 ist auch mit einem Anschluss 40 für eine Spannungsversorgung verbunden. Der Analog-Digital-Wandler 36 empfängt so über die Verbindungsleitung 66 und den Verbindungsknoten 65 das Potenzial der Spannungsversorgung. Das Ausgangssignal des Digital-Digital-Wandlers 38 repräsentiert somit die durch den Bitstrom am Verbindungsknoten 64 modulierte Versorgungsspannung des Anschlusses 40.

Der Verbindungsknoten 70 ist mit dem Steuerausgang 9 verbunden. Der Steuerausgang 9 empfängt somit - je nach dem welcher der Transistoren 17 oder 19 angesteuert wird - entweder das Massepotenzial des Masseanschlusses 50 oder das Potenzial des Anschlusses 40. Der Steuerausgang 9 ist über eine Verbindungsleitung 53 mit einem ersten Anschluss der Erregerspule 11 verbunden.

Der Elektromotor 3 weist auch eine Rotorsteuereinheit 42 auf. Die Rotorsteuereinheit 42 ist eingangsseitig mit dem Steuereingang 7 verbunden. Der Steuereingang 7 weist Anschlüsse für die Erregerspulen auf. Die Rotorsteuereinheit 42 ist über den Steuereingang 7 und eine Verbindungsleitung 53 mit dem ersten Anschluss der Erregerspule 11 verbunden. Die Rotorsteuereinheit 42 ist auch eingangsseitig über den Steuereingang 7 und eine Verbindungsleitung 51 mit einem ersten Anschluss der Erregerspule 13 und über den Steuereingang 7 und eine Verbindungsleitung 52 eingangsseitig mit einem ersten Anschluss der Erregerspule 15 verbunden. Die zweiten Anschlüsse der Erregerspulen 11, 13 und 15 sind jeweils miteinander verbunden und bilden so einen Sternanschluss 75 einer durch die Erregerspulen 11, 13 und 15 gebildeten Sternschaltung. Die Rotorsteuereinheit 42 ist über den Steuereingang 7 auch eingangsseitig mit dem Sternanschluss 75 verbunden. Die Rotorsteuereinheit 42 ist ausgangsseitig über eine Verbindungsleitung 46 mit dem Pulsgenerator 44, ausgangsseitig über eine Verbindungsleitung 49 mit dem Pulsgenerator 45 und ausgangsseitig über eine Verbindungsleitung 54 mit dem Steuereingang 7 der Steuervorrichtung 1 verbunden. Die Rotorsteuereinheit 42 ist ausgebildet, in Abhängigkeit von einem eingangsseitig empfangenen Rotorpositionssignal - in diesem Ausführungsbeispiel einer von einer Erregerspule erzeugten induzierten Spannung - das Rotorsteuersignal, insbesondere als analoges Signal, zu erzeugen und dieses ausgangsseitig auszugeben. Die Rotorsteuereinheit 42 kann beispielsweise in Abhängigkeit von einer Signalamplitude und/oder Phasenlage eines durch Induktion erzeugten Spannungssignalverlaufes des am Eingang 7 empfangenen Rotorpositionssignals das Rotorsteuersignal an den Pulsgenerator 44, 45 oder an den Pulsgenerator 10 senden, um so mittels des Rotorsteuersignals und mittels der Erregerspulen ein magnetisches Drehfeld zu erzeugen und so den Rotor 5 in eine Drehbewegung um die Achse 41 zu versetzen. Die Rotorsteuersignale auf den Verbindungsleitungen 54, 46 und 49 stehen somit in einem durch die Rotorsteuereinheit erzeugten Phasenverhältnis zueinander, das eine Winkelgeschwindigkeit des magnetischen Drehfeldes bestimmt. Die Rotorsteuereinheit 42 kann beispielsweise - anders als in diesem Ausführungsbeispiel - mit Hallgebern verbunden sein, wobei der Elektromotor 3 dann in diesem Ausführungsbeispiel für jede Erregerspule einen Hallgeber aufweist, welcher ausgebildet ist, eine Änderung eines Magnetfeldes zu erfassen und eine der Änderung entsprechende Hallspannung zu erzeugen.

Die Rotorsteuereinheit 42 kann beispielsweise mittels des Pulsgenerators 44 einen Steuerpuls erzeugen und diesen über die Verbindungsleitung 47 an die Erregerspule 13 senden. Der Rotor 5 kann dadurch beispielsweise im Uhrzeigersinn in eine Drehbewegung versetzt werden. Die Rotorsteuereinheit 42 kann nach dann in Abhängigkeit von einem von der Erregerspule 11 und/oder von der Erregerspule 15 empfangenen induzierten Spannungssignal ein Rotorsteuersignal erzeugen und dieses über die Verbindungsleitung 54 an den Eingang 8 des Pulsgenerators 10 senden. Der Delta-Sigma-Wandler 4 kann dann das am Eingang 8 empfangene Rotorsteuersignal in einen Bitstrom wandeln. Der Delta-Sigma-Wandler 4 ist mittels einer durch den Digital-Digital-Wandler 38 gebildeten Spannungsrückführung rückgekoppelt und ist so ausgebildet, ein den Bitstrom bildendes Ausgangssignal erzeugen, welches eine über die Verbindungsleitungen 69 und 66 eingangsseitig empfangene Versorgungsspannungsschwankung kompensieren kann.
Das Addierglied 24 bildet zusammen mit dem Flip-Flop 26 einen Integrator welcher ausgebildet ist, das über die Verbindungsleitung 55 empfangene Signal zu summieren und über die Verbindungsleitung 59 an den Komparator 30 zu senden. Der Komparator 30 ist ausgebildet, ein Ausgangssignal zu erzeugen, wenn ein eingangsseitig empfangenes Signal einen vorbestimmten Schwellwert über- oder unterschreitet. Der Komparator 30 ist in diesem Ausführungsbeispiel als digitaler Schwellwertschalter ausgebildet. Der Komparator 30 kann das mittels des Schwellwert Verfahrens erzeugte Ausgangssignal über die Verbindungsleitung 61 an das Flipflop 32 senden, welches in diesem Ausführungsbeispiel einen 1-Bit-Speicher bildet. Am Verbindungsknoten 64 liegt somit ein Bitstrom an, dessen Bitfolgefrequenz durch den Taktgeber 34 bestimmt ist. Der Bitstrom am Verbindungsknoten 64 bildet das bereits erwähnte Transistorsteuersignal. Der so erzeugte Bitstrom am Ausgang des Flip-Flops 32 weist einen im Vergleich zum am Eingang 8 empfangenen Rotorsteuersignal vergrößerten Frequenzumfang auf und wird ausgangsseitig über die Verbindungsleitung 64 an den Gate-Treiber 20 gesendet. Die Rotorsteuereinheit 42 ist über eine Verbindungsleitung 73 mit dem Gate-Treiber 20 verbunden. Die Rotorsteuereinheit 42 ist ausgebildet, zum Erzeugen des magnetischen Drehfeldes ein Abschaltsignal zu erzeugen, mit dem der Gate-Treiber abgeschaltet werden kann, so dass Im abgeschalteten Zustand kein Gate angesteuert wird.

Der Delta-Sigma-Wandler 4 kann beispielsweise auch ein IIR-Filter aufweisen. Das IIR-Filter ist dann anstelle des Differenzglieds 22 und des Integrators, gebildet durch das Addierglied 24 und das Flipflop 26 angeordnet. Eine Rückkopplung des IIR-Filters wird dann über die Spannungsrückführung, gebildet durch die Verbindungsleitung 68 und den Digital-Digital-Wandler 38 bewirkt.

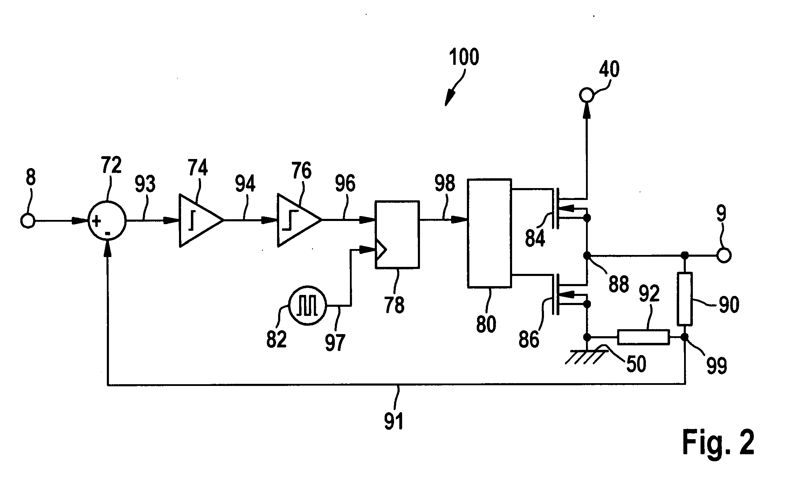

Figur 2 zeigt ein weiteres Ausführungsbeispiel für einen Pulsgenerator 100. Der Pulsgenerator 100 weist einen Eingang 8 für ein Rotorsteuersignal, einen Steuerausgang 9 und einen Anschluss 40 für eine Versorgungsspannung auf. Der Pulsgenerator 100 kann Bestandteil des in Figur 1 dargestellten Elektromotors 3 sein. Der Pulsgenerator 100 kann so anstelle des Pulsgenerators 10 eingangsseitig mit der Verbindungsleitung 54, ausgangsseitig mit der Verbindungsleitung 53 und mit der Versorgungsspannung über den Anschluss 40 verbunden sein. Der Pulsgenerator 100 weist einen Delta-Sigma-Wandler mit analogen Komponenten auf. Der Delta-Sigma-Wandler weist ein Differenzglied 72 auf, welches eingangsseitig mit einem positiven Eingang mit dem Eingang 8 verbunden ist. Das Differenzglied 72 ist ausgangsseitig über eine Verbindungsleitung 93 mit einem Integrator 74 verbunden. Der Integrator 74 ist ausgangsseitig über eine Verbindungsleitung 94 mit einem Komparator 76 verbunden, welcher ausgangsseitig über eine Verbindungsleitung 96 mit einem Flip-Flop 78 verbunden ist. Das Flip-Flop 78 ist über eine Verbindungsleitung 97 eingangsseitig mit einem Taktgeber 82 verbunden. Ausgangsseitig ist das Filp-Flop 78 über eine Verbindungsleitung 98 mit einem Gate-Treiber 80 verbunden. Der Gate-Treiber 80 ist ausgangsseitig mit einem Gate-Anschluss eines ersten Transistors 84 und ausgangsseitig mit einem Gate-Anschluss eines zweiten Transistors 86 verbunden-Die Transistoren 84 und 86 können jeweils als Metall-Oxid-Halbleiter-Feldeffekt-Transistor (MOS-FET) oder als Metall-Isolator-Halbleiter-Feldeffekt-Transistor (MIS-FET) ausgebildet sein und bilden zusammen eine Translstor-Halbbrücke. Ein Source-Anschluss des Transistors 86 ist mit dem Massepotenzial 50 verbunden, ein Drain-Anschluss des Transistors 86 ist über einen Verbindungsknoten 88 mit einem Source-Anschluss des Transistors 84 verbunden. Ein Drain-Anschluss des Transistors 84 ist mit dem Anschluss 40 für eine Versorgungsspannung verbunden. Der Verbindungsknoten 88 bildet einen Ausgang der Transistorhalbbrücke und ist mit dem Steuerausgang 9 verbunden.

Der Pulsgenerator 100 weist auch eine Spannungsrückführung zum Rückkoppeln des Delta-Sigma-Wandlers auf. Der Delta-Sigma-Wandler ist durch das Differenzglied 72, den Integrator 74, den Komparator 76 und das Flip-Flop 78 gebildet. Die Spannungsrückführung weist einen Spannungsteiler auf, welcher durch die Widerstände 90 und 92 gebildet Ist. Der Widerstand 90 ist mit einem ersten Anschluss mit dem Steuerausgang 9 verbunden und mit einem zweiten Anschluss mit einem Teilungsanschluss 99 verbunden. Der Widerstand 92 ist mit einem zweiten Anschluss mit dem Teilungsanschluss 99 und mit einem ersten Anschluss mit dem Masseanschluss 50 verbunden. Der Teilungsanschluss 99 ist über eine Verbindungsleitung 91 mit einem negativen Eingang des Differenzglieds 72 verbunden. So wird das am Steuerausgang 9 anliegende Potenzial geteilt und zum Rückkoppeln des Delta-Sigma-Wandlers auf das Differenzglied 72 zurückgeführt. Auf diese Weise wird während eines Betriebes der Steuervorrichtung 1 eine Versorgungsspannungsschwankung wenigstens teilweise reduziert oder vollständig aufgehoben.

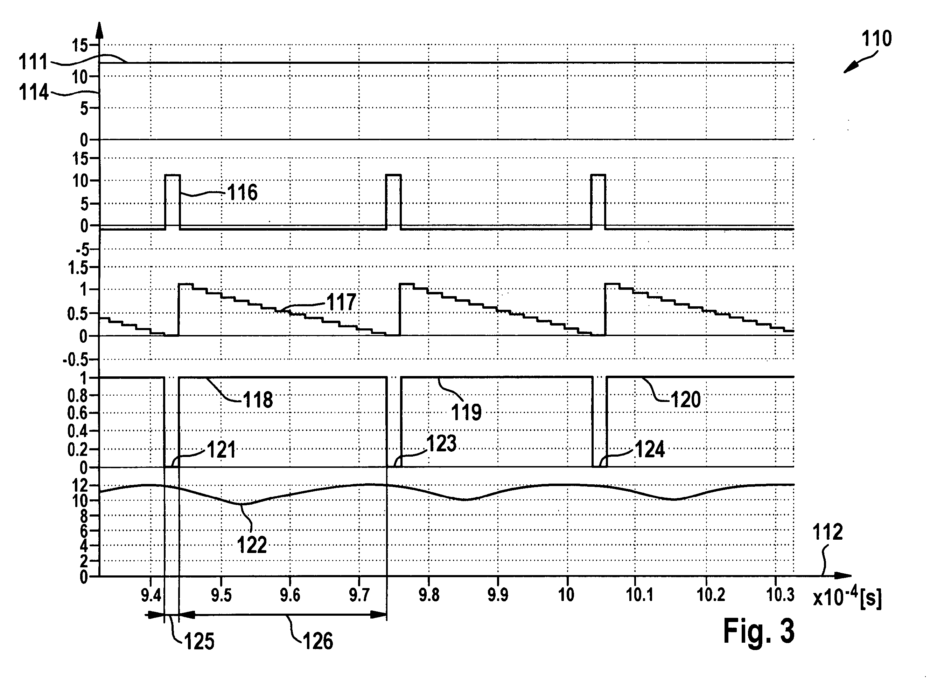

Figur 3 zeigt ein Ausführungsbeispiel für Signale, welche von der in Figur 1 beschriebenen Steuervorrichtung 1 erzeugt worden sind, auf die auch im Folgenden Bezug genommen wird.

Dargestellt ist ein Diagramm 110. Das Diagramm 110 weist eine Abszisse 112 und eine Ordinate 114 auf. In dem Diagramm 110 zeigt eine Kurve 111 einen zeitlichen Verlauf einer Versorgungsspannung, welche an dem Anschluss 40 anliegt. Die Abszisse 112 repräsentiert eine Zeitachse. Die dort aufgetragenen Zeiten sind in 10⁻⁴ Sekunden angegeben. Die Kurve 111 repräsentiert einen zeitlichen Spannungsverlauf, wobei eine Spannung des Spannungsverlaufes konstant 12 Volt beträgt. Das Diagramm 110 zeigt auch eine Kurve 116. Die Kurve 116 zeigt einen beispielhaften Signalverlauf am Ausgang des Differenzglied 22, welcher periodisch und in Zeitabständen aufeinanderfolgende Delta-Impulse aufweist. Das Diagramm 110 zeigt auch einen Signalverlauf 117, welcher periodisch und in Zeitabständen aufeinanderfolgende Sägezahnrampen aufweist. Der Signalverlauf 117 tritt beispielsweise als Antwortsignal auf die Delta-Impulse des Signals 116 am Ausgang des Flip-Flops 26 und somit auch am Verbindungsknoten 58 auf. Der Komparator 30 empfängt somit eingangsseitig das Signal 117. Das Signal 116 weist zwischen den Delta-Impulsen einen negativen Gleichspannungsanteil auf. Das bewirkt bei einem Integrieren durch das Addierglied 24 zusammen mit jeder getakteten Ausgabe des Flip-Flops 26 einen treppenförmig absteigenden Signalverlauf des Signals 117. Jede Höhe der Treppenstufen entspricht dabei dem negativen Gleichspannungsanteil des Signals 116 zwischen den Delta-Impulsen.

Das Diagramm 110 zeigt auch einen digitalen Bitstrom. Der digitale Bitstrom bildet das Transistorsteuersignal am Verbindungsknoten 64 und dient zum Ansteuern der Transistorhalbbrücke über den Gate-Treiber 20. Der digitale Bitstrom umfasst Steuerpulse 118, 119 und 120. Die Steuerpulse 118, 119 und 120 haben jeweils eine Steuerpulsdauer 126. Dem Steuerpuls 118 geht in diesem Ausführungsbeispiel eine Pulspause 121 mit einer Pulspausendauer 125 voran. Dem Steuerpuls 119 geht eine Pulspause 123, und dem Steuerpuls 120 eine Pulspause 124 voran.

Das Diagramm 110 zeigt auch einen Signalverlauf 122. Der Signalverlauf 122 repräsentiert ein Ausgangssignal der Steuervorrichtung 1 am Steuerausgang 9 unter induktiver Last der Erregerspulen des Elektromotors 3. Das Ausgangssignal, welches einen ursprünglichen Signalverlauf entsprechend dem Bitstrom aufweist, ist durch die Erregerspulen als induktive Last tiefpassgefiltert und erhält somit den Signalverlauf 122 als Ergebnis der Tiefpassfilterung.

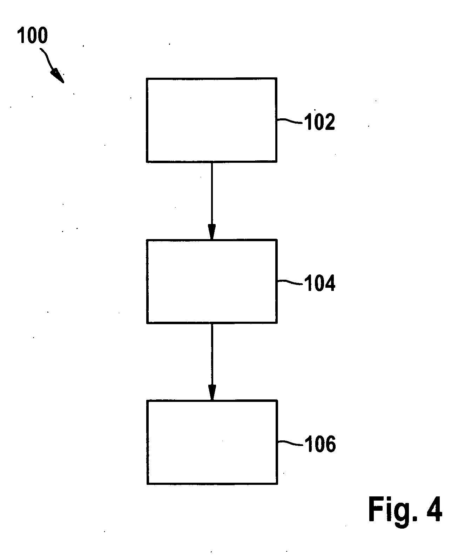

Figur 4 zeigt ein Ausführungsbeispiel für ein Verfahren zum Erzeugen eines Laststromes zum Erzeugen eines Drehmomentes mittels eines Rotors eines elektronisch kommutierten Elektromotors. Bei dem Verfahren wird in einem ersten Schritt in Abhängigkeit eines eine Rotorposition des Rotors repräsentierenden Rotorpositionssignals ein Steuersignal zum Bewegen des Rotors erzeugt. Das Steuersignal wird mittels Delta-Sigma-Wandelns erzeugt und weist Steuerpulse und Pulspausen auf. In einem weiteren Verfahrensschritt 104 wird eine Versorgungsspannung über eine Spannungsrückführung an einen Eingang des Delta-Sigma-Wandlers zurückgeführt und dort mittels Differenzbildung vom eingangsseitig empfangenen Signal subtrahiert. In einem weiteren Verfahrensschritt 106 wird mittels des Laststromes der Rotor des elektronisch kommutierten Elektromotors bewegt und so ein Drehmoment erzeugt.

Eine beispielhafte Samplingfrequenz des Delta-Sigma-Wandlers der Steuervorrichtung beträgt zwischen dem 10- und 100-fachen der Rotordrehzahl. Der Delta-Sigma-Wandler arbeitet somit mit 10- bis 100-facher Überabtastung. Eine beispielhafte Pulsfolgefrequenz zum Ansteuern der Transistorhalbbrücke beträgt zwischen 2 Kilohertz und 1 Megahertz, bevorzugt 5 Megahertz, besonders bevorzugt 10 Megahertz.

## Patentansprüche

1. Steuervorrichtung (1) zum Steuern eines elektronisch kommutierten Elektromotors (3), wobei die Steuervorrichtung (1) einen Steuereingang (7) für ein eine Rotorposition eines Rotors (5) des Elektromotors (3) repräsentierendes Rotorpositionssignal und einen Steuerausgang (9) zum Verbinden mit Erregerspulen (11, 13, 15) des Elektromotors (3) aufweist und ausgebildet ist, in Abhängigkeit von dem Rotorpositionssignal einen Laststrom zum Bewegen des Rotors (5) zu erzeugen und den Laststrom über den Steuerausgang (9) auszugeben, wobei die Steuervorrichtung (1) wenigstens einen mit dem Steuerausgang (9) verbundenen Halbleiterschalter (17, 19, 84, 86) aufweist, der ausgebildet ist, in Abhängigkeit von einem Halbleitersteuersignal einen Laststrom zum Bewegen des Rotors (5) zu schalten, und die Steuervorrichtung (1) wenigstens einen den wenigstens einen Halbleiterschalter (17, 19, 84, 86) umfassenden Pulsgenerator (10, 44, 45; 100) aufweist, welcher eingangsseitig mit dem Steuereingang (7) wirkverbunden und ausgangsseitig mit dem Steuerausgang (9) verbunden ist, wobei der Pulsgenerator (10, 44, 45; 100) ausgebildet ist, den Laststrom zum Bewegen des Rotors (5) als gepulstes Halbleitersteuersignal derart zu erzeugen, dass das gepulste Halbleitersteuersignal zeitlich aufeinanderfolgende Steuerpulse (118, 119, 120) mit einer Steuerpulsdauer (126) aufweist, wobei der Pulsgenerator (10, 44, 45, 100) einen Delta-Sigma-Wandler (4) aufweist, der eingangsseitig mit dem Steuereingang (7) wirkverbunden und ausgebildet ist, in Abhängigkeit von dem Rotorpositionssignal das Halbleitersteuersignal als digitalen Bitstrom zu erzeugen, und der einen Rauschgenerator (30, 32; 76, 78) aufweist, welcher ausgebildet ist, einem an einem Eingang (8) des Pulsgenerators (10, 100) empfangenen, in Abhängigkeit des Rotorpositionssignals erzeugten Rotorsteuersignal ein Rauschen zu überlagern und den digitalen Bitstrom derart zu erzeugen, dass eine Pulsfolgefrequenzbandbreite des Halbleitersteuersignals größer ist als eine Frequenzbandbreite des eingangsseitig empfangenen Rotorpositionssignals, **dadurch gekennzeichnet, dass** zur Erzeugung des Rauschens und zur Vergrößerung des Frequenzumfangs des Halbleitersteuersignals der Rauschgenerator (30, 32; 76, 78) des Sigma-Delta-Wandlers (4) durch einen mittelbar mit dem Eingang (8) des Pulsgenerators (10, 100) verbundenen Komparator (30, 76) und ein mit dem Komparator (30, 76) sowie einem Taktgeber (34, 82) verbundenes Flip-Flop (32, 78) gebildet ist, wobei eine Spannungsrückführung (36, 38, 68, 90, 91, 92) derart realisiert ist, dass der Ausgang des Flip-Flops (32, 78) über einen Digital-Digital-Wandler (38) oder einen Spannungsteiler (90, 92) auf ein mit dem Eingang (8) des Pulsgenerators (10, 100) verbundenes Differenzglied (22, 72) rückgekoppelt ist.

2. Steuervorrichtung (1) nach Anspruch 1, **dadurch gekennzeichnet, dass** die Spannungsrückführung (36, 38, 68, 90, 92) einen Lastzweig (65, 88) des Halbleiterschalters (17, 19; 84, 86) mit dem Differenzglied (22, 72) verbindet und ausgebildet ist, eine Spannung (40, 99) des Lastzweiges (65, 88) auf das Differenzglied (22, 72) zurückzuführen, so dass ein Regelglied (36, 38, 68, 90, 92, 22, 72) gebildet ist, welches ausgebildet ist, eine Versorgungsspannungsschwankung wenigstens teilweise zu kompensieren.

3. Steuervorrichtung (1) nach Anspruch 1, **dadurch gekennzeichnet, dass** der Spannungsteiler (90, 99) mit dem Steuerausgang (9) und mit einem Masseanschluss (50) verbunden ist und mit einem Teilungsanschluss (99) mit dem Differenzglied (72) verbunden ist und so ausgebildet ist, ein zwischen dem Masseanschluss (50) und dem Steuerausgang (9) mittels Spannungsteilung erzeugtes Potential auf das Differenzglied (72) zurückzuführen.

4. Steuervorrichtung (1) nach Anspruch 1, **dadurch gekennzeichnet, dass** das Regelglied (36, 38, 68, 72) einen eingangsseitig mit dem Lastzweig (65) verbundenen Analog-Digital-Wandler (36) aufweist, der ausgangsseitig mit dem Differenzglied (22) mindestens mittelbar verbunden ist und ausgebildet ist, einen Bitstrom zu erzeugen, der eine Versorgungsspannung (40) der Steuervorrichtung (1) repräsentiert.

5. Steuervorrichtung (1) nach Anspruch 4, **dadurch gekennzeichnet, dass** der Digital-Digital-Wandler (38) ausgangsseitig mit dem Differenzglied (22) und eingangsseitig mit dem Analog-Digital-Wandler (36) verbunden ist, wobei der Digital-Digital-Wandler (38) einen Steuereingang aufweist, welcher mit dem von dem Delta-Sigma-Wandler (4) erzeugten digitalen Bitstrom verbunden ist und der Digital-Digital-Wandler (38) ausgebildet ist, im Falle einer am Steuereingang empfangenen logischen "Eins" des Bitstromes ein vom Analog-Digital-Wandler (36) empfangenes Digitalsignal digital zu wandeln und ein Wandlungsergebnis oder ein zuvor erzeugtes Wandlungsergebnis ausgangsseitig auszugeben und im Falle einer eingangsseitig am Steuereingang empfangenen logischen "Null" des Bitstromes ein Ausgangssignal zu erzeugen, welches der logischen "Null" entspricht.

6. Elektromotor (3) mit einer Steuervorrichtung (1) gemäß einem der vorhergehenden Ansprüche, wobei der Elektromotor (3) einen permanentmagnetisch ausgebildeten Rotor (5) und einen Stator (43) mit wenigstens zwei Erregerspulen (11, 13, 15) aufweist, wobei die Erregerspulen (11, 13, 15) mit dem Steuerausgang (9) der Steuervorrichtung (1) verbunden sind.

7. Elektromotor (3) nach Anspruch 6, **dadurch gekennzeichnet, dass** der Stator (43) des Elektromotors (3) drei Erregerspulen (11, 13, 15) aufweist und die Steuervorrichtung (1) zum Ansteuern der Erregerspulen eine 3H-Brücke oder eine B6-Brücke aufweist, welche die Halbleiterschalter (17, 19, 84, 86) umfasst.

## Claims

1. Control device (1) for controlling an electronically commutated electric motor (3), wherein the control device (1) has a control input (7) for a rotor position signal representing a rotor position of a rotor (5) of the electric motor (3) and a control output (9) for connection to field coils (11, 13, 15) of the electric motor (3) and is designed to generate a load current for moving the rotor (5) depending on the rotor position signal and to output the load current via the control output (9), wherein the control device (1) has at least one semiconductor switch (17, 19, 84, 86) which is connected to the control output (9) and which is designed to switch a load current for moving the rotor (5) depending on a semiconductor control signal, and the control device (1) has at least one pulse generator (10, 44, 45; 100) which comprises the at least one semiconductor switch (17, 19, 84, 86) and which is operatively connected to the control input (7) on the input side and is connected to the control output (9) on the output side, wherein the pulse generator (10, 44, 45; 100) is designed to generate the load current for moving the rotor (5) as a pulsed semiconductor control signal in such a way that the pulsed semiconductor control signal has temporally successive control pulses (118, 119, 120) having a control pulse duration (126), wherein the pulse generator (10, 44, 45; 100) has a delta-sigma converter (4), which is operatively connected to the control input (7) on the input side and is designed to generate the semiconductor control signal as a digital bit stream depending on the rotor position signal, and which has a noise generator (30, 32; 76, 78) designed to superpose a noise on a rotor control signal received at an input (8) of the pulse generator (10, 100) and generated in a manner depending on the rotor position signal and to generate the digital bit stream in such a way that a pulse repetition frequency bandwidth of the semiconductor control signal is greater than a frequency bandwidth of the rotor position signal received on the input side, **characterized in that**, for generating the noise and for increasing the frequency scope of the semiconductor control signal, the noise generator (30, 32; 76, 78) of the sigma-delta converter (4) is formed by a comparator (30, 76), connected indirectly to the input (8) of the pulse generator (10, 100), and a flip-flop (32, 78), connected to the comparator (30, 76) and a clock generator (34, 82), wherein a voltage feedback (36, 38, 68, 90, 91, 92) is realized in such a way that the output of the flip-flop (32, 78) is fed back via a digital-to-digital converter (38) or a voltage divider (90, 92) to a difference element (22, 72) connected to the input (8) of the pulse generator (10, 100).

2. Control device (1) according to Claim 1, **characterized in that** the voltage feedback (36, 38, 68, 90, 92) connects a load branch (65, 88) of the semiconductor switch (17, 19; 84, 86) to the difference element (22, 72) and is designed to feed a voltage (40, 99) of the load branch (65, 88) back to the difference element (22, 72), such that a regulating element (36, 38, 68, 90, 92, 22, 72) is formed, which is designed to at least partly compensate for a supply voltage fluctuation.

3. Control device (1) according to Claim 1, **characterized in that** the voltage divider (90, 99) is connected to the control output (9) and to an earth terminal (50) and is connected by a division terminal (99) to the difference element (72) and is designed so as to feed a potential generated between the earth terminal (50) and the control output (9) by means of voltage division back to the difference element (72).

4. Control device (1) according to Claim 1, **characterized in that** the regulating element (36, 38, 68, 72) has an analogue-to-digital converter (36), which is connected to the load branch (65) on the input side and is connected at least indirectly to the difference element (22) on the output side and is designed to generate a bit stream representing a supply voltage (40) of the control device (1).

5. Control device (1) according to Claim 4, **characterized in that** the digital-to-digital converter (38) is connected to the difference element (22) on the output side and to the analogue-to-digital converter (36) on the input side, wherein the digital-to-digital converter (38) has a control input connected to the digital bit stream generated by the delta-sigma converter (4) and the digital-to-digital converter (38) is designed, in the case of a logic "one" of the bit stream received at the control input, to digitally convert a digital signal received from the analogue-to-digital converter (36) and to output a conversion result or a previously generated conversion result on the output side and, in the case of a logic "zero" of the bit stream received at the control input on the input side, to generate an output signal corresponding to the logic "zero".

6. Electric motor (3) comprising a control device (1) according to any of the preceding claims, wherein the electric motor (3) has a rotor (5) embodied in permanent-magnetic fashion and a stator (43) having at least two field coils (11, 13, 15), wherein the field coils (11, 13, 15) are connected to the control output (9) of the control device (1).

7. Electric motor (3) according to Claim 6, **characterized in that** the stator (43) of the electric motor (3) has three field coils (11, 13, 15) and the control device (1) has, for driving the field coils, a 3H bridge or a B6 bridge comprising the semiconductor switches (17, 19, 84, 86).

## Revendications

1. Dispositif de commande (1) destiné à commander un moteur électrique (3) à commutation électronique,
le dispositif de commande (1) présentant une entrée de commande (7) pour un signal de position de rotor qui représente la position du rotor (5) du moteur électrique (3) et une sortie de commande (9) destinée à être raccordée à des bobines d'excitation (11, 13, 15) du moteur électrique (3),
le dispositif de commande étant configuré pour former un courant de charge qui déplace le rotor (5) en fonction du signal de position du rotor et pour délivrer le courant de charge par l'intermédiaire de la sortie de commande (9),
le dispositif de commande (1) présentant au moins un commutateur semi-conducteur (17, 19, 84, 86) relié à la sortie de commande (9) et configuré pour commuter en fonction d'un signal de commande du semi-conducteur un courant de charge qui déplace le rotor (5),
le dispositif de commande (1) présentant au moins un générateur d'impulsions (10, 44, 45; 100) qui comporte un commutateur semi-conducteur (17, 19, 84, 86), dont l'entrée est raccordée fonctionnellement à l'entrée de commande (7) et dont la sortie est raccordée à la sortie de commande (9),
le générateur d'impulsions (10, 44, 45; 100) étant configuré pour former en tant que signal pulsé de commande du semi-conducteur le courant de charge qui déplace le rotor (5), de telle sorte que le signal pulsé de commande de semi-conducteur présente des impulsions successives de commande (118, 119, 120) d'une durée (126) d'impulsion de commande,
le générateur d'impulsions (10, 44, 45; 100) présentant un convertisseur delta-sigma (4) dont l'entrée est reliée fonctionnellement à l'entrée de commande (7), qui est configuré pour former le signal de commande de semi-conducteur sous la forme d'un flux numérique de bits en fonction du signal de position du rotor et qui présente un générateur de bruit (30, 32; 76, 78) configuré pour superposer un bruit à un signal de commande de rotor reçu à l'entrée (8) du générateur d'impulsions (10, 100) et formé en fonction du signal de position du rotor et pour former le flux numérique de bits de telle sorte que la largeur de bande de la fréquence de succession des impulsions du signal de commande du semi-conducteur soit supérieure à la largeur de bande de fréquence du signal de position de rotor reçu du côté de l'entrée,
**caractérisé en ce que**
pour former le bruit et augmenter la plage de fréquence du signal de commande du semi-conducteur, le générateur de bruit (30, 32; 76, 78) du convertisseur sigma-delta (4) est formé par un comparateur (30, 76) relié directement à l'entrée (8) du générateur d'impulsions (10, 100) et par une bascule bistable (32, 78) reliée au comparateur (30, 76) ainsi qu'à une horloge (34, 82), une rétroaction de tension (36, 38, 68, 90, 91, 92) pouvant être réalisée de telle sorte que la sortie de la bascule bistable (32, 78) soit reliée à rétroaction par l'intermédiaire d'un convertisseur numérique-numérique (38) ou d'un diviseur de tension (90, 92) à un organe (22, 72) de formation de différence relié à l'entrée (8) du générateur d'impulsions (10, 100).

2. Dispositif de commande (1) selon la revendication 1, **caractérisé en ce que** la rétroaction de tension (36, 38, 68, 90, 92) relie une branche de charge (65, 88) du commutateur semi-conducteur (17, 19; 84, 86) à l'organe (22, 72) de formation de différence et est configuré de manière à renvoyer à l'organe (22, 72) de formation de différence la tension (40, 99) de la branche de charge (65, 88) de manière à former un organe de régulation (36, 38, 68, 90, 92, 22, 72) configuré pour compenser au moins en partie des variations de la tension d'alimentation.

3. Dispositif de commande (1) selon la revendication 1, **caractérisé en ce que** le diviseur de tension (90, 99) est relié à la sortie de commande (9) et à une borne de masse (50), est relié par une borne de division (99) à l'organe (72) de formation de différence et est configuré de manière à renvoyer à l'organe (72) de formation de différence un potentiel formé entre la borne de masse (50) et la sortie de commande (9) au moyen de la division de la tension.

4. Dispositif de commande (1) selon la revendication 1, **caractérisé en ce que** l'organe de régulation (36, 38, 68, 72) présente un convertisseur analogique-numérique (36) dont l'entrée est reliée à la branche de charge (65), dont la sortie est reliée au moins indirectement à l'organe (22) de formation de différence et qui est configuré pour former un flux de bits qui représente la tension d'alimentation (40) du dispositif de commande (1).

5. Dispositif de commande (1) selon la revendication 4, **caractérisé en ce que** la sortie du convertisseur numérique-numérique (38) est reliée à l'organe (22) de formation de différence et son entrée au convertisseur analogique-numérique (36), le convertisseur numérique-numérique (38) présentant une entrée de commande reliée au flux numérique de bits formé par le convertisseur delta-sigma (4) et le convertisseur numérique-numérique (38) étant configuré de telle sorte qu'au cas où un "un" du flux de bits reçu à l'entrée de commande, il numérise un signal numérique reçu depuis le convertisseur analogique-numérique (36) et délivre à sa sortie le résultat de la conversion ou le résultat d'une conversion réalisée précédemment, et au cas où un "zéro" logique du flux de bits est reçu à l'entrée de commande, il forme un signal de sortie qui correspond au "zéro" logique.

6. Moteur électrique (3) doté d'un dispositif de commande (1) selon l'une des revendications précédentes, le moteur électrique (3) présentant un rotor (5) à magnétisation permanente et un stator (43) doté d'au moins deux bobines d'excitation (11, 13, 15), les bobines d'excitation (11, 13, 15) étant reliés à la sortie de commande (9) du dispositif de commande (1).

7. Moteur électrique (3) selon la revendication 6, **caractérisé en ce que** le stator (43) du moteur électrique (3) présente trois bobines d'excitation (11, 13, 15) et **en ce que** pour commander les bobines d'excitation, le dispositif de commande (1) présente un pont 3H ou un pont B6 qui comportent les commutateurs semi-conducteurs (17, 19, 84, 86).
